# EUROPÄISCHE PATENTANMELDUNG

(11) **EP 0 740 470 A2**
(43) Veröffentlichungstag der Anmeldung: **30.10.1996**
(21) Anmeldenummer: 96105620.7
(22) Anmeldetag: 10.04.1996
(51) Int. Cl.: H04N 7/173

(54) **Kommunikationssystem mit hierarchischer Serverstruktur**

(30) Priorität: 25.04.1995 DE 19514616
(71) Anmelder: Alcatel SEL Aktiengesellschaft, D-70435 Stuttgart (DE); ALCATEL N.V., NL-2288 BH Rijswijk (NL)
(72) Erfinder: Wahl, Stefan, 71701 Schwieberdingen (DE)
(74) Vertreter: Schätzle, Albin, Dipl.-Phys.

(57) **Zusammenfassung**

Es ist ein Kommunikationssystem (KS) mit einer hierarchischen Serverstruktur für einen Abrufdienst anzugeben, das eine geeignete Erfüllung von Anforderungen für Dienste durch Benutzer (U1 ... UN) ermöglicht. Dazu ist das Kommunikationssystem (KS), vom jeweiligen Benutzer (U1 ... UN) aus gesehen, in einen zentralen (I) und einen benutzernahen (II) Entfernungsbereich eingeteilt. Durch die Benutzer (U1 ... UN) häufig angeforderte Filme (A1 ... A10) sind in benutzernahen Servern (SL1 ... SLN) und selten angeforderte Filme (B1 ... B100) in zentralen Servern (SM) abgespeichert.
Erfindungsgemäß erfüllt in dem Fall mangelnder Versorgungsmöglichkeit mit einem durch den Benutzer (U11 ... U13) angeforderten Film (B2) durch den benutzernahen Server (SL1) der zentrale Server (SM) oder ein anderer, benutzernaher Server (SL2 ... SLN) über eine vermittelte Verbindung zwischen dem anfordernden Benutzer (U11 ... U13) und dem zentralen Server (SM) oder dem anderne, benutzernahen Server (SL2 ... SLN) die Anforderung des Benutzers (U11 ... U13).

## Beschreibung

Die vorliegende Erfindung betrifft ein Kommunikationssystem nach dem Obergegriff des Patentanspruchs 1.

Aus dem Aufsatz "An Open Systems Approach To Video On Demand" von Y.-H. Chang et al, IEEE Communications Magazine, May 1994, Seiten 68 bis 80, ist ein solches Kommunikationssystem bekannt. Das Kommunikationssystem ist ein Kommunikationssystem für Video-On-Demand (VOD), in dem als Dienst Filme in den Servern abgespeichert sind. In diesem Aufsatz wird beschrieben, daß drei Faktoren die optimalen Orte der Server des Kommunikationssystems und der abgespeicherten Filme bestimmen. Dies sind die Speicherkosten, die Übertragungskosten und die erwartete Anzahl von gleichzeitigen Benutzern pro Film. Um Video-On-Demand für den Benutzer attraktiv zu machen, muß daher eine geeignete Serverstruktur des Kommunikationssystems gefunden werden, durch die die Kosten für den Dienst Video-On-Demand, die durch Hardwareinvestitionen für die Server und die Filmdatenübertragung über das öffentliche Kommunikationsnetz entstehen, gering gehalten werden können. Aus dem Aufsatz ist eine hierarchische Serverstruktur bekannt, die sich aus der Filmanforderungsrate und der geographischen Entfernung eines Servers von einem anfordernden Benutzer bestimmt. Das Kommunikationssystem ist in mehrere Entfernungsbereiche eingeteilt. Häufig gefragte Filme werden dabei in benutzernahen Servern (local server) und seltener gefragte Filme in zentralen Servern (regional server, national server, archive) abgespeichert. Die benutzernahen Server entsprechen dabei untergeordneten Servern und die zentralen Server übergeordneten Servern. Fordert ein Benutzer einen Film an, so wird ihm dieser Film von dem benutzernahen Server (local server) überspielt. Kann die Anforderung des Benutzers von dem benutzernahen Server nicht erfüllt werden, dann fordert der benutzernahe Server von dem zentralen Server eine Filmkopie des angeforderten Filmes an, die in dem benutzernahen Server abgespeichert wird (down loading). Der benutzernahe Server besitzt für die Abspeicherung dieses von dem zentralen Server übermittelten Filmes einen Reservespeicher. Der angeforderte Film wird über einen kurzen Zeitraum mit einer hohen Bitrate über das öffentliche Kommunikationsnetz von dem zentralen Server zu dem benutzernahen Server übertragen und dort in dem Reservespeicher abgespeichert. Geht die Anforderungshäufigkeit der in den benutzernahen Servern abgespeicherten, von den Benutzern häufig angeforderten Filmen zurück, so wird dieser Film in dem benutzernahen Server gelöscht und ist anschließend nur noch in den zentralen Servern vorhanden.

Es ist die Aufgabe der vorliegenden Erfindung, ein Kommunikationssystem mit einer hierarchischen Serverstruktur anzugeben, das eine geeignete, effektive Erfüllung von Anforderungen für Dienste von Benutzerendgeräten ermöglicht.

Diese Aufgabe ist durch die Lehre des Patentanspruchs 1 gelöst.

Vorteilhafte Ausgestaltungen der Erfindung sind den abhängigen Ansprüchen zu entnehmen.

Im folgenden wird die Erfindung anhand von Ausführungsbeispielen und den Figuren 1 bis 8 beschrieben. Es zeigen:
- Fig. 1: ein Ausführungsbeispiel eines erfindungsgemäßen Kommunikationssystems,
- Fig. 2: ein erstes Ausführungsbeispiel einer Anforderung von Filmen durch Benutzer,
- Fig. 3: ein zweites Ausführungsbeispiel einer Anforderung von Filmen durch Benutzer,
- Fig. 4: ein erstes Ausführungsbeispiel für eine Steuertabelle eines zentralen und eines benutzernahen Servers gemäß dem zweiten Ausführungsbeispiel nach Fig. 3,
- Fig. 5A, B: ein Ausführungsbeispiel für den zeitlichen Verlauf eines Filmanforderungswertes,
- Fig. 6: ein drittes Ausführungsbeispiel einer Anforderung von Filmen durch Benutzer nach einem Kopieren eines Filmes von dem zentralen zu dem benutzernahen Server,
- Fig. 7: ein zweites Ausführungsbeispiel für eine Steuertabelle des zentralen und des benutzernahen Servers gemäß dem dritten Ausführungsbeispiel nach Fig. 6 und
- Fig. 8: ein Ausführungsbeipiel für den zeitlichen Verlauf einer Anforderungsrate für einen Film.

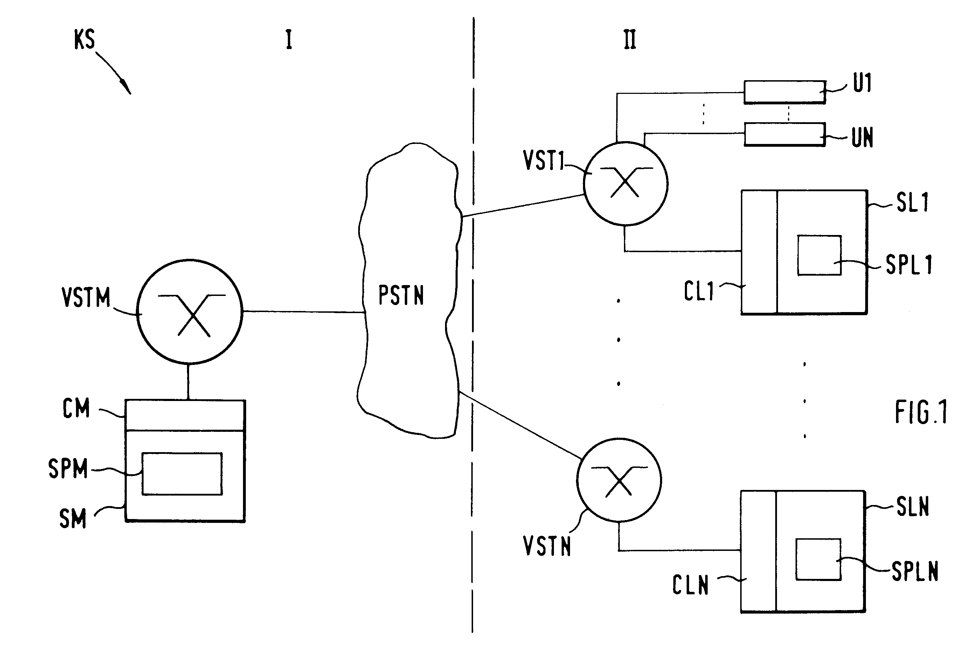

Fig. 1 zeigt das Ausführungsbeispiel eines erfindungsgemäßen Kommunikationssystems KS für einen Abrufdienst, der in den vorliegenden Ausführungsbeispielen ein Video-On-Demand Abrufdienst ist. Er kann aber auch ein Audioabrufdienst, ein Abrufdienst für elektronisch abgespeicherte Bücher oder ein anderer Abrufdienst sein. Die in den Ausführungsbeispielen abgespeicherten Dienste sind daher Filme, die von Benutzern angefordert werden können. Das Kommunikationssystem KS ist in zwei Entfernungsbereiche, einen zentralen Bereich I und einen benutzernahen Bereich II, eingeteilt. Diese beiden Entfernungsbereiche I und II bestimmen eine hierarchische Serverstruktur des Kommunikationssystems KS. Es ist auch möglich, die hierarchische Serverstruktur nach anderen Kriterien festzulegen. In dem zentralen Bereich I ist eine Vermittlungsstelle VSTM angeordnet, an die ein zentraler, übergeordneter Server SM angeschlossen ist. Der zentrale Server SM weist eine Steuereinrichtung CM und einen Speicher SPM zum Abspeichern von Filmen auf. An die Vermittlungsstelle VSTM können Benutzer angeschlossen sein, die allerdings für die Beschreibung der Erfindung im vorliegenden Ausführungsbeispiel nicht von Bedeutung sind. In dem benutzernahen Bereich II ist eine Vielzahl von weiteren Vermittlungsstellen VST1 ... VSTN (N ist eine natürliche Zahl, mit N > 1) angeordnet, an die jeweils ein benutzernaher, untergeordneter Server SL1 ... SLN angeschlossen ist. Die benutzernahen Server SL1 ... SLN enthalten jeweils eine Steuereinrichtung CL1 ... CLN und einen Speicher SPL1 ... SPLN zum Abspeichern von Filmen. An die Vermittlungsstellen VST1 ... VSTN des benutzernahen Bereichs II sind jeweils eine Vielzahl von Benutzern angeschlossen, von denen im Ausführungsbeispiel stellvertretend die Benutzer U1 ... UN dargestellt sind, die an die Vermittlungsstelle VST1 angeschlossen sind. Die Vermittlungsstellen VST1 ... VSTN des benutzernahen Bereichs II sind über ein Nachrichtennetz PSTN für vermittelte Verbindungen mit der Vermittlungsstelle VSTM des zentralen Bereichs I verbunden. Über dieses Nachrichtennetz PSTN können nach Bedarf Verbindungen zwischen den Benutzern und den Servern vermittelt werden.

Zur vereinfachten Beschreibung der Erfindung ist das Kommunikationssystem KS im vorliegenden Ausführungsbeispiel in zwei Entfernungsbereiche eingeteilt. Die Erfindung kann allerdings ebenso in einem anderen Kommunikationssystem mit mehr als zwei Entfernungsbereichen und einer beliebigen Anzahl von Vermittlungsstellen, die über eine beliebige Anzahl von Übertragungseinrichtungen auf eine andere Weise untereinander verbunden sind, angewendet werden. Ebenso kann an eine der Vermittlungsstellen keine oder eine beliebige Anzahl von Servern angeschlossen sein, denen jeweils eine bestimmte Anzahl von Benutzern zugeordnet ist.

Das Kommunikationssystem KS besitzt die hierarchische Serverstruktur, die sich aus der Anforderungsrate für die Filme und der geographischen Entfernung der Server von einem anfordernden Benutzer bestimmt. In den Speichern SPL1 ... SPLN der benutzernahen Server SL1 ... SLN sind die von den Benutzern, die einem der benutzernahen Server SL1 ... SLN zugeordnet sind, häufig angeforderten Filme abgespeichert. Die in den Speichern SPL1 ... SPLN abgespeicherten Filme können daher jeweils unterschiedlich sein und sind abhängig von der Anforderungsrate durch die den Servern jeweils zugeordneten Benutzer. Im folgenden wird stellvertretend für die benutzernahen Server SL1 ... SLN und ihren zugeordneten Benutzern der benutzernahe Server SL1 mit den diesem Server SL1 zugeordneten Benutzern U1 ... UN betrachtet. In dem Speicher SPL1 des benutzernahen Servers SL1 sind daher die von den Benutzern U1 ... UN am häufigsten angeforderten Filme A1 ... A10 abgespeichert. In dem Speicher SPM des zentralen Servers SM sind von den Benutzern U1 ... UN selten angeforderte Filme B1 ... B100 und die in dem Speicher SPL1 des benutzernahen Servers SL1 abgespeicherten, häufig angeforderten Filme A1 ... A10 abgespeichert. In dem Speicher SPM sind desweitern auch die von den anderen, hier nicht weiter betrachteten, den Servern SL2 ... SLN zugeordneten Benutzern des benutzernahen Bereichs II häufig angeforderten und in den Speichern SPL2 ... SPLN der jeweiligen benutzernahen Server SL2 ... SLN abgespeicherten Filme abgelegt, die nicht den in dem Speicher SPL1 abgespeicherten Filmen A1 ... A10 entsprechen. Diese Filme werden allerdings im vorliegenden Ausführungsbeispiel nicht weiter betrachtet.

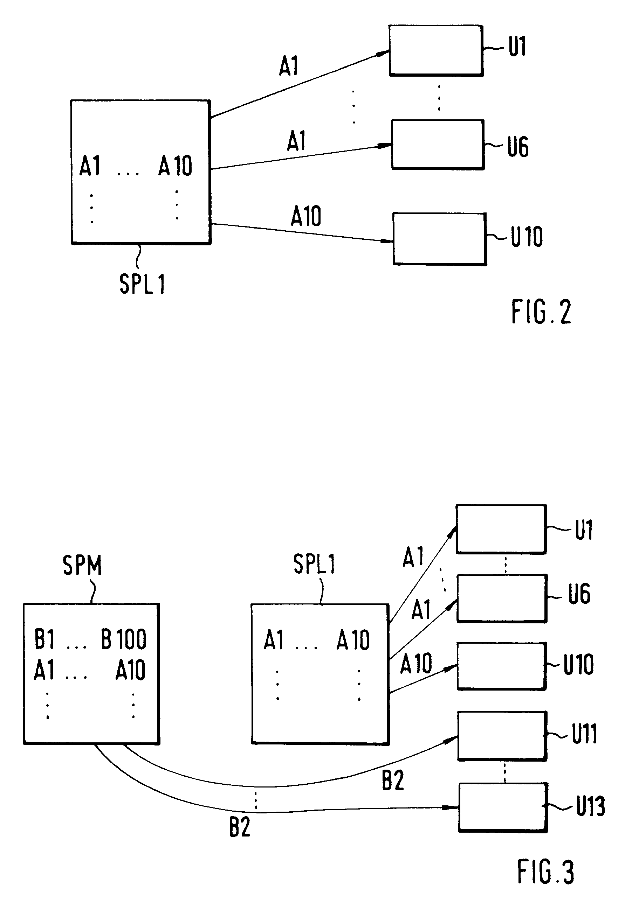

Fig. 2 zeigt das erste Ausführungsbeispiel einer Anforderung von Filmen durch die Benutzer U1 ... U6, U10. In dein Speicher SPL1 des benutzernahen Servers SL1 sind die häufig angeforderten Filme A1 ... A10 abgespeichert. In dem Speicher SPL1 könne entsprechend einer angenommenen Anforderungsrate der Filme durch die Benutzer mehrere Kopien eines Filmes abgelegt sein. Im ersten Ausführungsbeispiel nach Fig. 2 wird den Benutzern U1 ... U6 im Augenblick jeweils der Film A1 von dem benutzernahen Server SL1 übermittelt. Dem Benutzer U10 wird von dem benutzernahen Server SL1 der Film A10 übermittelt. Im vorliegenden Ausführungsbeispiel werden daher alle Anforderungen von Filmen von dem benutzernahen Server SL1 erfüllt. Weitere Anforderungen von Filmen durch die Benutzer werden einfachheitshalber nicht dargestellt, sind allerdings vorhanden.

Fig. 3 zeigt ein zweites Ausführungsbeispiel einer Anforderung von Filmen durch die Benutzer U1 ... U6, U10 ... U13. In diesem zweiten Ausführungsbeispiel können nicht alle Anforderungen von Filmen durch die Benutzer von dem benutzernahen Server SL1 erfüllt werden. In dem zweiten Ausführungsbeispiel nach Fig. 3 werden, wie bereits in dem ersten Ausführungsbeispiel nach Fig. 2, den Benutzern U1 ... U6 jeweils der Film A1 und dem Benutzer U 10 der Film A10 von dem benutzernahen Server SL1 überspielt. Desweiteren werden den Benutzern U11 ... U13 jeweils der Film B2 aus dem Speicher SPM von dem zentralen Server SM überspielt. Da der benutzernahe Server SL1 die Benutzer U11 ... U13 nicht mit dem Film B2 versorgen konnte, wurden die Anforderungen für den Film B2 durch die Benutzer U11 ... U13 von dem benutzernahen Server SL1 an den zentralen Server SM weitergeleitet und werden von diesem erfüllt. Eine mangelnde Versorgungsmöglichkeit mit einem Film durch den benutzernahen Server SL1 liegt auch dann vor, wenn die Anzahl der Kopien für einen der häufig angeforderten Filme A1 ... A10 im Speicher SPL1 des benutzernahen Servers SL1 nicht ausreicht, um die Anzahl der Anforderungen für diesen Film durch die Benutzer U1 ... UN zu erfüllen. In diesem Fall werden die überzähligen Anforderungen für diesen Film ebenfalls an den zentralen Server SM weitergegeben und von ihm erfüllt.

Zur Steuerung der Anforderungen für einen Film durch die Benutzer U1 ... UN besitzt der benutzernahe Server SL1 die Steuereinrichtung CL1 und der zentrale Server SM die Steuereinrichtung CM. Bei einer Anforderung für einen Film durch einen der Benutzer U1 ... UN wird durch die Vermittlungsstelle VST1 eine Verbindung zu dem benutzernahen Server SL1 aufgebaut. Die Steuereinrichtung CL1 empfängt die Befehle des jeweiligen Benutzers und veranlaßt die Übermittlung des angeforderten Filmes aus dem Speicher SPL1 zu dem anfordernden Benutzer. Bei mangelnder Versorgungsmöglichkeit mit dem angeforderten Film durch den benutzernahen Server SL1 veranlaßt die Steuereinrichtung CL1 eine Weitergabe der Anforderung des jeweiligen Benutzers U1 ... UN zu dem zentralen Server SM. Die Steuereinrichtung CM des zentralen Servers SM empfängt die Befehle des benutzernahen Servers SL1 und veranlaßt den Aufbau einer Daten- und Steuerverbindung zu dem jeweiligen anfordernden Benutzer U1 ... UN. Die Verbindung zwischen dem anfordernden Benutzer U1 ... UN und dem benutzernahen Server SL1 wird dabei ausgelöst. Die Steuereinrichtung CM veranlaßt anschließend die Übermittlung des angeforderten Filmes aus dem Speicher SPM zu dein jeweiligen anfordernden Benutzer U1 ... UN.

Es ist allerdings auch bei mangelnder Versorgungsmöglichkeit mit dem angeforderten Film durch den benutzernahen Server SL1 möglich, die Anforderung für diesen Film an einen der benachbarten, anderen benutzernahen Server SL2 ... SLN weiterzuleiten, so daß diese Anforderung von diesem benutzernahen Server SL2 ... SLN erfüllt werden kann. Dazu überprüft die Steuereinrichtung CM des zentralen Servers SM, ob einer der anderen benutzernahen Server SL2 ... SLN die Anforderung erfüllen kann. In dem zentralen Server SM sind dazu Informationen vorhanden, welche Filme und wieviele Kopien diese Filme jeweils in den benutzernahen Servern SL1 ... SLN abgespeichert sind. Stellt die Steuereinrichtung CM fest, daß einer der anderen, benutzernahen Server SL2 ... SLN die Anforderung erfüllen kann, so veranlaßt sei einen Aufbau einer Verbindung zwischen dem jeweiligen anfordernden Benutzer U1 ... UN und dem anderen, benutzernahen Server SL2 ... SLN, über die der andere, benutzernahe Server SL2 ... SLN die Anforderung des jeweiligen anfordernden Benutzers U1 ... UN erfüllt.

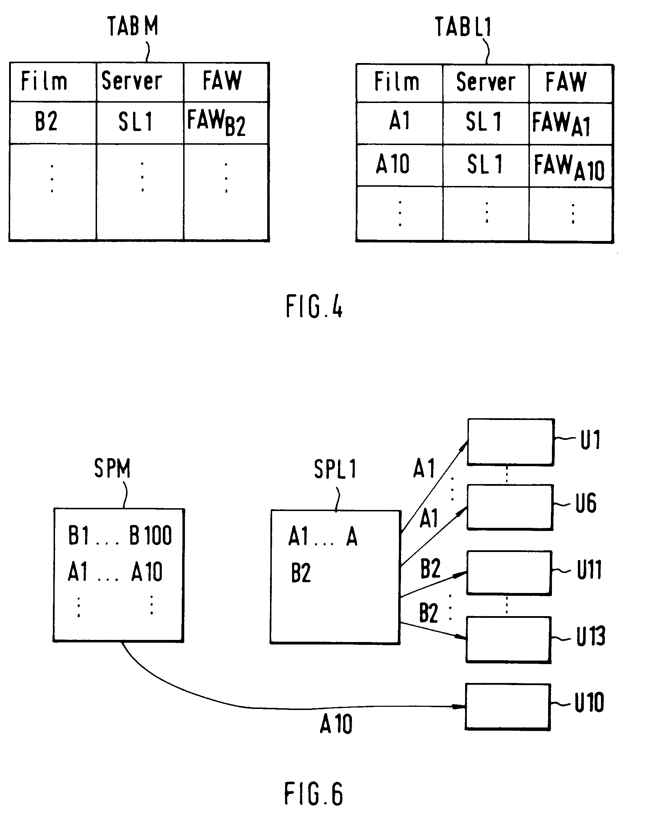

Die Steuereinrichtungen CL1 und CM erstellen für den jeweiligen Server SL1 und SM eine Steuertabelle. Fig. 4 zeigt das erste Ausführungsbeispiel für die Steuertabellen des zentralen Servers SM und des benutzernahen Servers SL1 gemäß dem zweiten Ausführungsbeispiel nach Fig. 3. Die Steuertabelle TABL1 des benutzernahen Servers SL1 wird von der Steuereinrichtung CL1 erstellt und enthält für jeden, in dem Speicher SPL1 abgespeicherten Film A1 ... A10 einen Filmanforderungswert FAW und die Angabe des Servers, dem die Benutzer zugeordnet sind, die den jeweiligen Film augenblicklich anfordern. Die Steuertabelle TABM des zentralen Servers SM wird durch die Steuereinrichtung CM erstellt. Sie enthält ebenfalls für jeden in dein Speicher SPM abgespeicherten Film die Angabe des Filmanforderungswertes FAW und des Servers, dem die Benutzer zugeordnet sind, die diesen Film augenblicklich anfordern und damit den Filmanforderungswert FAW erzeugen. Der Filmanforderungswert FAW gibt ein Zeitintegral über einer Funktion an, die von den gleichzeitig vorliegenden Anforderungen für den jeweiligen Film, die von dem jeweiligen Server augenblicklich erfüllt werden, abhängt. In dem Fall des zentralen Servers SM gibt der Filmanforderungswert FAW ein Zeitintegral über einer Funktion an, die von den gleichzeitig vorliegenden Anforderungen für den jeweiligen Film, die von dem zentralen Server SM aufgrund mangelnder Versorgungsmöglichkeiten des benutzernahen Servers SL1 augenblicklich erfüllt werden, abhängt. Die Funktion hat bei keiner gleichzeitig vorliegenden Anforderung einen negativen Wert, wodurch sich der Filmanforderungswert FAW verringert, bis er minimal den Wert null erreicht. Die Funktion hat bei einer oder mehreren gleichzeitig vorliegenden Anforderungen einen positiven Wert, der von der Anzahl der gleichzeitig vorliegenden Anforderungen und eventuell auch von weitern Faktoren, wie z. B. den Speicherkosten, den Übertragungskosten, etc., abhängt. Dadurch steigt in diesem Fall der Filmanforderungswert FAW, wobei er allerdings nach oben hin begrenzt ist, d. h. es ist ein maximaler Filmanforderungswert FAWₘₐₓ vorgegeben. Das Zeitintegral wird in den vorliegenden Ausführungsbeispielen von dem Zeitpunkt des Bereitstellens des jeweiligen Films in dem jeweiligen Server SM, SL1 ... SLN bis zum aktuellen Zeitpunkt bestimmt, so daß der Filmanforderungswert FAW ebenfalls die Anforderungsgeschichte des jeweiligen Films beinhaltet.

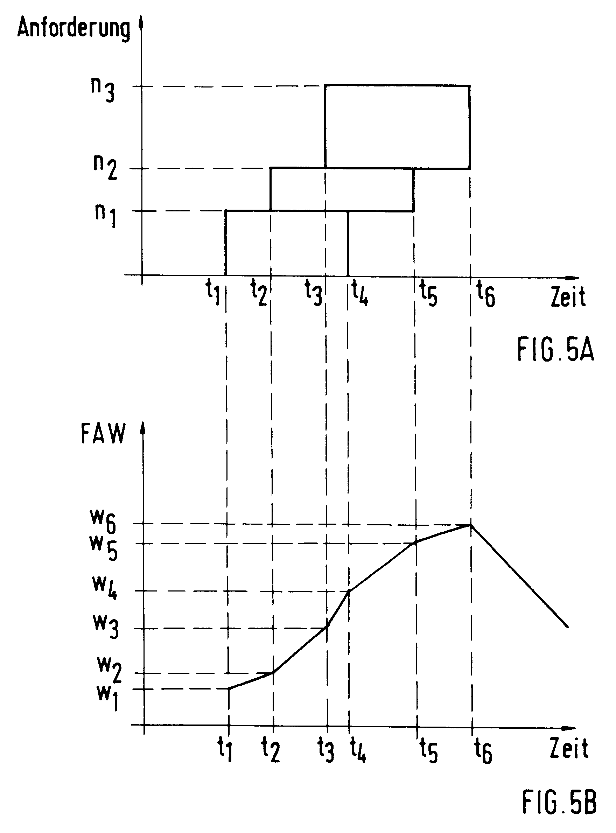

Fig. 5 A und B zeigen ein Ausführungsbeispiel für den zeitlichen Verlauf des Filmanforderungswertes FAW, wie er sich aus der Anzahl der gleichzeitig vorliegenden Anforderungen bestimmt.In der Fig. 5A ist ein Koordinatensystem abgebildet, in dem die Anzahl der Anforderungen für einen Film über der Zeit aufgetragen ist. Zu einem Zeitpunkt t₁ liegen in dem jeweiligen Server SM, SL1 ... SLN n₁ Anforderungen für den Film vor. Zu einem Zeitpunkt t₂ erhöht sich die Anzahl der Anforderungen auf n₂ und zu einem Zeitpunkt t₃ auf n₃ Anforderungen. Zu einem Zeitpunkt t₄ verringert sich die Anzahl der Anforderungen auf n₃ - n₁ und zu einem Zeitpunkt t₅ auf n₃ - n₂. Zu einem Zeitpunkt t₆ liegen in dem Server keine Anforderungen für den Film mehr vor.

Fig. 5B zeigt ein Koordinatensystem, in dem der Filmanforderungswert FAW für die Anzahl der Anforderungen gemäß dem Ausführungsbeispiel nach Fig. 5A über der Zeit aufgetragen ist. In dem Ausführungsbeispiel nach Fig. 5 A und B ist die Anforderungshäufigkeit des Films vor der hier dargestellten Zeit dadurch berücksichtigt, daß der FAW zum Zeitpunkt t₁ bei einem Wert w₁ ungleich null liegt. Der FAW steigt nun leicht linear steigend bis zu einem Wert w₂ > w₁ zum Zeitpunkt t₂ an. Nun erhöht sich die positive Steigung der Kurve, da mehr Anforderungen vorliegen und erreicht zum Zeitpunkt t₃ einen Wert w₃ > w₂. Die Steigung der Kurve erhöht sich anschließend noch einmal, bis sie zum Zeitpunkt t₄ einen Wert w₄ > w₃ erreicht. Da nun die Anzahl der Anforderungen wieder abnimmt, verringert sich auch die positive Steigung der Kurve und erreicht zum Zeitpunkt t₅ einen Wert w₅ > w₄. Danach nimmt die Anzahl der Anforderungen weiter ab, die Steigung der Kurve verringert sich ebenfalls und zum Zeitpunkt t₆ beträgt der FAW w₆ > w₅. Da nun für den Film keine Anforderungen mehr vorliegen, wird die Funktion zur Bestimmung des FAW, über die das Zeitintegral gebildet wird, negativ. D. h., die Steigung der Kurve des FAW wird hier ebenfalls negativ und der FAW nimmt ab.

Im zweiten Ausführungsbeispiel gemäß Fig. 3 versorgt der benutzernahe Server SL1 die Benutzer U1 ... U6 jeweils mit dem Film A1. In der Steuertabelle TABL1 nach Fig. 4 wird daher von der Steuereinrichtung CL1 für den Film A1 und den Server SL1 ein Filmanforderungswert FAW_{A1} eingetragen, da der benutzernahe Server SL1 den Film A1 zu den Benutzern U1 ... U6 übermittelt, die diesem benutzernahen Server SL1 zugeordnet sind. Demzufolge enthält die Steuertabelle TABL1 desweitern für den Film A10 und den Server SL1 den Filmanforderungswert FAW_{A10}, da der benutzernahe Server SL1 dem Benutzer U10, der diesem benutzernahen Server SL1 zugeordnet ist, den Film A10 übermittelt. Die Steuertabelle TABM des zentralen Servers SM enthält nach Fig. 4 für den Film B2 und den benutzernahen Server SL1 den Filmanforderungswert FAW_{B2}, da gemäß dem zweiten Ausführungsbeispiel nach Fig. 3 der zentrale Server SM den Benutzern U11 ... U13, die dem benutzernahen Server SL1 zugeordnet sind, jeweils den Film B2 übermittelt. Weitere Eintragungen in die Steuertabellen TABL1 und TABLM werden einfachheitshalber nicht aufgeführt.

Die Steuereinrichtung CL1 des benutzernahen Servers SL1 veranlaßt eine Übermittlung der Filmanforderungswerte FAW zu dem zentralen Server SM. Die Steuereinrichtung CM des zentralen Servers SM vergleicht die von dem benutzernahen Server SL1 übermittelten Filmanforderungswerte FAW mit den Filmanforderungswerten FAW seiner Steuertabelle TABM für Anforderungen von Filmen, die der zentrale Server SM aufgrund mangelnder Versorgungsmöglichkeiten des benutzernahen Servers SL1 erfüllt. In dem Ausführungsbeispiel gemäß Fig. 4 veranlaßt die Steuereinrichtung CL1 des benutzernahen Servers SL1 die Übermittlung des Filmanforderungswertes FAW_{A1} für den Film A1 und den Server SL1 und des Filmanforderungswertes FAW_{A10} für den Film A10 und den Server SL1 über eine Verbindung zwischen dem benutzernahen Server SL1 und dem zentralen Server SM zu dem zentralen Server SM. Die Steuereinrichtung CM des zentralen Servers SM empfängt die übermittelten Filmanforderungswerte und vergleicht sie mit dem Filmanforderungswert FAW_{B2} der Tabelle TABM für den Film B2 und den Server SL1. Die Steuereinrichtung CM ermittelt dabei im vorliegenden Ausführungsbeispiel, daß der Filmanforderungswert FAW_{B2} für den Film B2 und den Server SL1 größer ist als der von dem benutzernahen Server SL1 übermittelte Filmanforderungswert FAW_{A10} für den Film A10 und den Server SL1. Das bedeutet, daß die integrierte Anforderungsrate für den Film B2 durch die Benutzer U11 ... U13, die dem benutzernahen Server SL1 zugeordnet sind, größer ist als die integrierte Anforderungsrate für den Film A10 durch den Benutzer U10, der ebenfalls dem benutzernahen Server SL1 zugeordnet ist. Da der Film B2 allerdings über eine längere geographische Entfernung von dem zentralen Server SM zu den jeweiligen Benutzern U11 ... U13 übertragen werden muß, statt über die kurze Entfernung zwischen dem benutzernahen Server SL1 und den Benutzern U11 ... U13, veranlaßt die Steuereinrichtung CM des zentralen Servers SM ein Kopieren des Filmes B2 in den Speicher SPL1 des benutzernahen Servers SL1. Der Filmanforderungswert stellt damit ein Kriterium für eine Entscheidung innerhalb der hierarchischen Serverstruktur des Kommunikationssystems KS dar, welcher Film und wann dieser Film von dem zentralen Server SM zu einem der benutzernahen Server SL1 ... SLN kopiert wird.

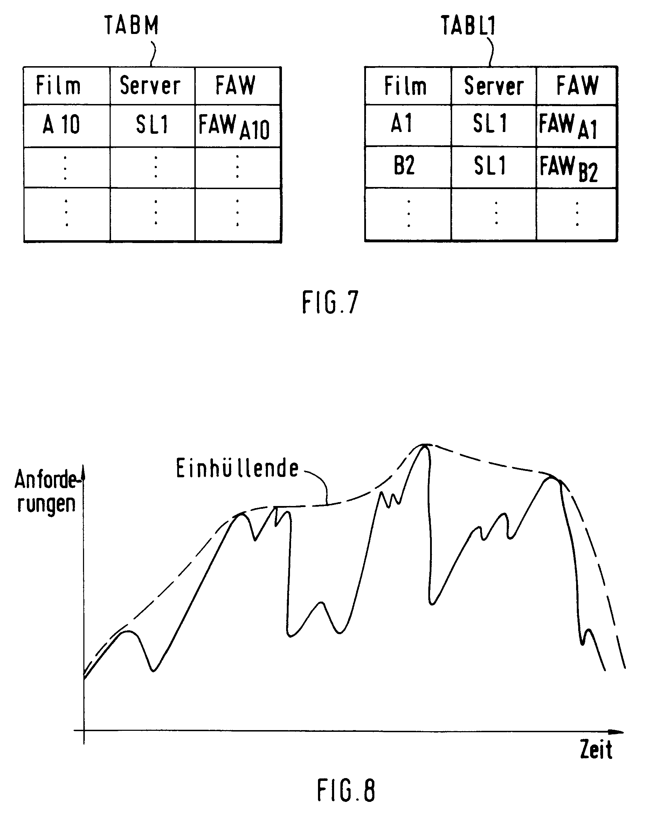

Fig. 6 zeigt das dritte Ausführungsbeispiel einer Anforderung von Filmen durch die Benutzer U 1 ... U6, U10 ... U13 nach dem Kopieren des Filmes B2 von dem zentralen Server SM zu dein benutzernahen Server SL1. Der Speicher SPM des zentralen Servers SM enthält nun weiterhin die Filme B1 ... B100 und A1 ... A10. Der Speicher SPL1 des benutzernahen Servers SL1 enthält nach dem Kopieren die Filme A1 ... A9 und B2. Das bedeutet, daß bei dem Kopieren des Filmes B2 von dem zentralen Server SM zu dem benutzernahen Server SL1 der Film A10 in dem Speicher SPL1 gelöscht wurde. Es ist allerdings auch möglich, den Film A10 weiterhin in dem Speicher SPL1 abgespeichert zu lassen, wenn die Kapazität des Speichers SPL1 groß genug ist. Im vorliegenden dritten Ausführungsbeispiel nach Fig. 6 übermittelt der benutzernahe Server SL1 nun jeweils den Film A1 zu den Benutzern U1 ... U6 und den Film B2 jeweils zu den Benutzern U11 ... U13. Der Film A10 wird nun über eine Verbindung zwischen dem Benutzer U10 und dem zentralen Server SM aus dem Speicher SPM zu dem Benutzer U10 übermittelt.

Fig. 7 zeigt das zweite Ausführungsbeispiel für die Steuertabellen des zentralen Servers SM und des benutzernahen Servers SL1 nach dem Kopieren des Filmes B2 in den Speicher SPL1 gemäß dem dritten Ausführungsbeispiel nach Fig. 6. Die von der Steuereinrichtung CL1 erstellte Steuertabelle TABL1 enthält nun für den Film A1 und den Server SL1 den Filmanforderungswert FAWA1 und für den Film B2 und den Server SL1 den Filmanforderungswert FAW_{B2.} Die von der Steuereinrichtung CM erstellte Steuertabelle TABM enthält nun für den Film A10 und den Server SL1 den Filmanforderungswert FAW_{A10}.

In den beschriebenen Ausführungsbeispielen veranlaßt die Steuereinrichtung CL1 des benutzernahen Servers SL1 die Übermittlung der Filmanforderungswerte FAW zu dem zentralen Server SM. Erfindungsgemäß ist es auch möglich, daß die Steuereinrichtung CL1 den kleinsten Filmanforderungswert FAW der Steuertabelle TABL1 bestimmt und ausschließlich die Übermittlung dieses kleinsten Filmanforderungswertes zu dem zentralen Server SM veranlaßt. Auf diese Weise werden weniger Daten zwischen den beiden Servern SL1 und SM übertragen und die Steuereinrichtung CL1 muß weniger Vergleichsoperationen durchführen. Darüber hinaus ist es ebenfalls möglich, daß die Übermittlung der Filmanforderungswerte FAW von dem benutzernahen Server SL1 zu dem zentralen Server SM von der Steuereinrichtung CL1 zu vorgegebenen Zeitpunkten veranlaßt wird oder daß die Übermittlung der Filmanforderungswerte FAW durch die Steuereinrichtung CM des zentralen Servers SM angefordert wird.

Die Bestimmung der Filmanforderungswerte FAW durch die Steuereinrichtung CM kann vorteilhafterweise so verändert werden, daß die Erhöhung des Filmanforderungswertes FAW von der geographischen Entfernung des zentralen Servers SM und des anfordernden Benutzers abhängt. Dazu kann die Anzahl der Anforderungen für Filme, die von dem zentralen Server SM erfüllt werden, mit einem zusätzlichen Faktor, einem Exponenten, einer e-Funktion, etc. versehen werden, so daß der zugehörige Filmanforderungswert FAW überproportional zu der Anzahl der Anforderungen durch diese Benutzer, deren Anforderungen von dem benutzernahen Server SL1 nicht erfüllt werden können, steigt.

Fig. 8 zeigt das Ausführungsbeispiel für den zeitlichen Verlauf einer Anforderungsrate für einen der Filme. In einem Koordinatensystem ist auf der Ordinate die Zeit aufgetragen und auf der Abszisse die Anzahl der Anforderungen für diesen Film. Zusätzlich zu dem tatsächlichen Verlauf der Anforderungsrate ist in Fig. 8 die einhüllende Kurve gestrichelt eingezeichnet. Üblicherweise sind in den Speichern zum Abspeichern der Filme der Server des Kommunikationssystems KS, insbesondere in den benutzernahen Servern, mehrere Kopien eines Filmes abgespeichert. Die Anforderungsrate des Filmes bestimmt die Anzahl der Kopien. Diese Anzahl der Kopien sollte allerdings nicht der tatsächlichen zeitabhängigen Anforderungsrate folgen, da dies zu vielen Umkopiervorgängen von Filmen führen würde. Daher kann vorteilhafterweise die einhüllende Kurve der tatsächlichen zeitabhängigen Anforderungsrate der Festlegung der Anzahl der Kopien für den Film dienen.

## Patentansprüche

1. Kommunikationssystem (KS) mit Servern (SM, SL1 ... SLN), die jeweils einen Speicher (SPM, SPL1 ... SPLN) zum Abspeichern von Diensten und eine Steuereinrichtung (CM, CL1 ... CLN) haben, mit Vermittlungsstellen (VSTM, VST1 ... VSTN), an die die Server (SM, SL1 ... SLN) angeschlossen sind und die miteinander gekoppelt sind,
mit Benutzerendgeräten (U1 ... UN), die an die Vermittlungsstellen (VSTM, VST1 ... VSTN) angeschlossen sind,
mit einer hierarchischen Serverstruktur mit untergeordneten Servern (SL1 ... SLN) und übergeordneten Servern (SM) **dadurch gekennzeichnet**, daß
bei mangelnder Versorgungsmöglichkeit mit einem Dienst durch einen der untergeordneten Server (SL1 ... SLN) bei einer Anforderung eines der Benutzerendgeräte (U1 ... UN) der jeweilige übergeordnete Server (SM) oder einer der anderen untergeordneten Server (SL1 ... SLN) in der Lage ist, über eine vermittelte Verbindung zwischen dem anfordernden Benutzerendgerät (U1 ... UN) und dem jeweiligen übergeordneten Server (SM) oder dem anderen untergeordneten Server (SL1 ... SLN) die Anforderung des Benutzerendgerätes (U1 ... UN) zu erfüllen.

2. Kommunikationssystem nach Anspruch 1,
dadurch gekennzeichnet, daß die Steuereinrichtung (CM, CL1 ... CLN) eines jeden Servers (SM, SL1 ... SLN) einen Dienstanforderungswert (FAW) für jeden in dem Speicher (SPM, SPL1 ... SPLN) zum Abspeichern von Diensten abgespeicherten Dienst bestimmt, daß der Dienstanforderungswert (FAW) ein Kennzeichen für eine Anforderungshäufigkeit des Dienstes durch die Benutzerendgeräte (U1 ... UN) ist und daß der Dienstanforderungswert (FAW) ein Kriterium für das Abspeichern einer der Dienste in einem der untergeordneten (SL1 ... SLN) oder dem jeweiligen übergeordneten Server (SM) ist.

3. Kommunikationssystem nach Anspruch 2,
dadurch gekennzeichnet, daß die Steuereinrichtung (CL1 .. CLN) eines jeden untergeordneten Servers (SL1 ... SLN) eine Übermittlung der Dienstanforderungswerte (FAW) zu dem übergeordneten Server (SM) veranlaßt,
daß die Steuereinrichtung (CM) des übergeordneten Servers (SM) die übermittelten Dienstanforderungswerte (FAW) eines jeden untergeordneten Servers (SL1 .. SLN) mit den Dienstanforderungswerten (FAW) für Anforderungen von Diensten (B2) vergleicht, die der übergeordnete Server (SM) aufgrund mangelnder Versorgungsmöglichkeit des jeweiligen untergeordneten Servers (SL1 ... SLN) erfüllt, und
daß die Steuereinrichtung (CM) des übergeordneten Servers (SM) ein Kopieren des Dienstes (B2) in den Speicher (SPL1 ... SPLN) zum Abspeichern von Diensten des jeweiligen untergeordneten Servers (SL1 ... SLN) veranlaßt, dessen Dienstanforderungswert (FAW) im übergeordneten Server (SM) größer ist als der Dienstanforderungswert (FAW) eines der Dienste (A10) des jeweiligen untergeordneten Servers (SL1 ... SLN).

4. Kommunikationssystem nach Anspruch 3,
dadurch gekennzeichnet, daß die Steuereinrichtung (CL1 ... CLN) eines jeden untergeordneten Servers (SL1 ... SLN) die Übermittlung der Dienstanforderungswerte (FAW) zu dem jeweiligen übergeordneten Server (SM) in vorgegebenen zeitlichen Abständen veranlaßt.

5. Kommunikationssystem nach Anspruch 2,
dadurch gekennzeichnet, daß der Dienstanforderungswert ein Zeitintegral über einer Funktion angibt, die bei keiner in dem jeweiligen Server (SM, SL1 ... SLN) vorliegenden Anforderung für diesen Dienst einen negativen Wert hat und die bei einer oder mehreren gleichzeitig vorliegenden Anforderungen für diesen Dienst einen positiven Wert hat, der von der Anzahl der gleichzeitig vorliegenden Anforderungen abhängt,

6. Kommunikationssystem nach Anspruch 2,
dadurch gekennzeichnet, daß die Steuereinrichtung (CM) des jeweiligen übergeordneten Servers (SM) den Dienstanforderungswert (FAW) für den Dienst (B2) überproportional erhöht, dessen Anforderung von einem der Benutzerendgeräte (U1 ... UN) der jeweilige übergeordnete Server (SM) aufgrund mangelnder Versorgungsmöglichkeit des jeweiligen untergeordneten Servers (SL1 ... SLN) erfüllt,

7. Kommunikationssystem nach Anspruch 1,
dadurch gekennzeichnet, daß es in mehrere Entfernungsbereiche (I, II), von einem der Benutzerendgeräte (U1 ... UN) aus betrachtet, eingeteilt ist und
daß die untergeordneten Server (SL1 ... SLN) in dem benutzernahen Entfernungsbereich (II) und die übergeordneten Server (SM) in dem zentralen Entfernungsbereich (I) angeordnet sind.
